# EUROPEAN PATENT APPLICATION

(11) **EP 1 688 048 A1**
(43) Date of publication of application: **09.08.2006**
(21) Application number: 04805074.4
(22) Date of filing: 29.11.2004
(51) Int. Cl.: A23L 1/221, A23L 2/56

(54) **METHOD OF PRODUCING A COCA LEAF EXTRACT-BASED DRINK, PRODUCT THUS OBTAINED AND METHOD OF PREPARING SAID COCA LEAF EXTRACT AND PRODUCT**

(30) Priority: 28.11.2003 ES 200302907; 24.02.2004 PE 1892004
(71) Applicant: ROYAL FOOD AND DRINK, SL., 17001 Girona (ES)
(72) Inventor: PI RAMBLA, Anselm, E-17001 GIRONA (ES)
(74) Representative: Gislon, Gabriele
(86) International application number: PCT/ES2004/000531
(87) International publication number: WO 2005/051101

(57) **Abstract**

The method comprises the steps or stages of (i) dissolving a coca leaf extract in water at a ratio of between 1:8 and 1:1,2 ; (ii) leaving resulting solution to stand; (iii) decanting the supernatant with a siphon; (iv) dissolving a product having sweetening properties in water; (v) adding the supernatant from step (iii) to the liquid from step (iv); (vi) adding citric acid; (vii) adding lemon oil which has been diluted in drinkable alcohol; and viii) mixing everything until complete dissolution with water until a desired level of Brix degrees are obtained.

## Description

This invention relates to a method of producing a coca leaf extract-based drink and obtained product and to a method of preparing a coca leaf extract and product obtained comprising following stages: a first stage in which a coca-leaf extract is dissolved in water a ratio between 1: 8 and 1:12 (parts coca-leaf extract / parts water); a second stage where it is left to settle, one part sinking and the second floating; a third stage wherein the floating part is drawn off by means of a siphon; a fourth stage where a sugary product or one with sweetening properties is dissolved in water; a fifth stage where the floating part resulting from the third stage is added to the liquid resulting from the fourth stage; a sixth stage where citric acid is added; a seventh stage in which lemon essence diluted in alcohol suitable for human consumption is added and a eighth stage wherein everything is mixed until a completely dissolution adding water until it is completely even and the required degrees of Brix are achieved.

### BACKGROUND OF THE INVENTION

Inventions are known in the state of the art which refers to obtaining a coca-leaf extract for commercial use.

ES-A-2049672 from 1992 in the name of Aguil PAZ LORAS discloses a physical method to obtain coca extract from the coca leaf in two stages; first the selection and drying of coca powder in the production area, that is, mature coca-leaf, dried and sieved, ground in a mill with rollers in boiling water which constitutes an extract, free of impurities after filtering, mixed with a preservative, preferably sodium benzoate, centrifuged to produce an emulsion of the extract and the preservative and the dried residue remaining on the walls of the liquidiser to produce the final product of the method.

Other patents are known such as US 4956429 from Penick Corporation from 1989 which makes reference to an aroma of coca, extracting the noxious agents such as cocaine and ecgonine by a described method. The inventors point out that it has organoleptic properties.

### BRIEF DESCRIPTION OF THE INVENTION

The present invention provides a progress in the drinks sector as, by means of a novel method, a drink is obtained with energising properties.

Traditionally, the coca-leaf has been considered an excellent physical restore which combats fatigue and stimulates the cardiac and respiratory functions.

Its effectiveness has been proved repeatedly in its various uses whether as an infusion or a drink, characterising it as a product which creates general well-being, having properties which, *sui generis,* are good for the digestive process, as a source of energy and are dietary.

The method of producing said drink can be summarized in the following stages: a first stage in which a coca-leaf extract is dissolved in water in a ratio between 1: 8 and 1:12 (parts coca-leaf extract / parts water); a second stage where it is left to settle, one part sinking and the second floating; a third stage wherein the floating part is drawn off by means of a siphon; a fourth stage where a sugary product or one with sweetening properties is dissolved in water; a fifth stage where the floating part resulting from the third stage is added to the liquid resulting from the fourth stage; a sixth stage where citric acid is added; a seventh stage in which lemon essence diluted in alcohol suitable for human consumption is added and a eighth stage wherein everything is mixed until a completely dissolution adding water until it is completely even and the required degrees of Brix are achieved.

Later the product resulting from the eighth stage is filtered and bottled hot and under vacuum.

The product obtained by the previously explained method is a refreshing coca-leaf drink with a high energy content without any kind of artificial additives, preservatives, flavourings or colorants and is thus a 100% natural product.

It is also a great rebuilder of energy. It revitalises the body and the mind. It contains vitamins, minerals, proteins, tannins, flavinoids and oligoelements. It has a powerful digestive, circulatory, anti-fatigue and anti-stress action.

It is a respiratory agent used to treat altitude sickness and is also a carbohydrate, metabolism regulator.

Another object of this invention relate to a method for preparing a concentrated coca leaf extract characterized in that it comprises a first stage where ground coca leaf is soaked in a hydro-alcoholic solution in a ratio between 1:5 and 1:10 (parts coca-leaf / parts hydro-alcoholic solution); as second stage where the soluble elements are separated from those which are not, also known as lixiviation, by the contact of the ground coca leaves with the hydro-alcoholic solution obtaining a hydro-alcoholic extract and a flock-dross; a third stage in which the hydro-alcoholic extract from the previous stage is passed through a solids separator obtaining a new hydro-alcoholic extract and a flock-dross; a fourth stage in which the hydro-alcoholic extract of the third stage is centrifuged obtaining a hydro-alcoholic extract and a sludge and/or a cream; a fifth stage where the floating part from the previous stage is drawn off to obtain a hydro-alcoholic extract and a sludge; a sixth stage where the solids from the hydro-alcoholic extract from the fifth stage are filtered to obtain a filtered extract and a cream and a seventh stage wherein the filtered extract is subjected to a heat source to obtain a concentrated extract.

The concentrated extract is then homogenised and packaged.

### SPECIFIC EMBODIMENTS OF THE PATENT APPLICATION

In practise, the method to be followed in manufacturing a coca-leaf based drink according to the invention comprises the following series of stages.

In a first stage, a coca-leaf extract is dissolved in a container or 'bach' of water with a capacity of 1000 litres. The ratio used is that of, for each part of coca-leaf extract, 8 to 12 of water. In practise, for said 1000 litre container, between 4.5 and 6 kilos of coca-leaf extract will be used.

In the second stage, the product of stage 1 is left to settle for 24 hours, one element sinking and the other floating on top.

In the third stage the floating part referred to in the second stage is drawn off by means of a siphon. It is important to comment that said floating part should not be allowed to mix with the solids which have sunk to the bottom of the container.

In the fourth stage a sugary product or one with sweetening properties is dissolved in water. A sugary product or one with sweetening properties may be used as a 'light' or diabetic version of the drink may be produced using sweeteners without glucose. In this instance some 70 to 90 kilos of sugar are used.

In the fifth stage, the floating part resulting from the third stage is added to the sweetened liquid resulting from the fourth stage.

Later, in a sixth stage, between 1.25 and 2 kilos of citric acid is added.

In the seventh stage 150 to 200 millilitres of essence of lemon diluted in the same quantity of alcohol for human consumption are added. Said alcohol can be for Example of 96°.

In the eighth stage everything is mixed until reaching a completely dissolution adding water until the evening is completed; in this embodiment taking into account that the used container is of 1000 litres, the evening should be done until 1000 litres, until the needed degrees of Brix, between 7,8 and 9 degrees of Brix are obtained.

The product resulting from the eight stage is then filtered by means of a filter, said filter being preferably a canvas filter.

In a further step the final product is pasteurised to 90 °C during a period of time of about 2 minutes in order to destroy microorganisms that can be found in the sugar and in the leaf coca extract.

Finally the drink product is bottled hot; under a temperature of at least 80 °C. Next the bottle lid is closed under vacuum in order to inhibit development of serofile microorganisms.

The resulting product is a drink which, for every 300 millilitres has the following composition;
- coca-leaf extract between 1.1 and 1.7 millilitres
- essence of lemon between 0.040 and 0.060 millilitres
- sugar between 0.02 and 0.03 kilogrammes
- citric acid between 0.4 and 0.5 grammes and,
- alcohol suitable for human consumption between 0.04 and 0.06 millilitres said product also having
- a pH between 3 and 4
- between 8 and 9 degrees of Brix
- a density between 1.01 and 1.03 g/ml. and
- an alkaloid content between 7 and 20 milligrammes.

The method to be followed to make a concentrated coca-leaf extract and the product obtained according to the following invention comprises a series of stages as follows.

In a first stage, ground coca leaf is soaked in a hydro-alcoholic solution in a ratio between 1:5 and 1:10 (parts coca-leaf / parts hydro-alcoholic solution) for approximately 24 hours and cold as the cold saves time in this method.

In this particular embodiment of the invention 260 kilogrammes of ground coca-leaf, 390 litres of 96° alcohol for human consumption and 1560 litres of de-ionised water have been used.

It should be made clear that the quantities used may vary according to the final pH or the Brix degrees required, the colour, flavour, aroma etc., this being an example but not the only one.

The hydro-alcoholic solution ratio is between 1:3 and 1:6 (parts 96°. alcohol for human consumption / parts de-ionised water).

In a second stage the soluble elements are separated from those which are not, also known as lixiviation, through the contact of the ground coca leaves with the hydro-alcoholic solution to obtain a hydro-alcoholic extract and a flock-dross.

For the lixiviation a lixiviator which works cold is used. Thanks to the blades of the lixiviator the hydro-alcoholic extract is shaken to aid the release of its components.

A quantity of de-ionised water is used to aid the drawing off of the hydro-alcoholic extract by means of a decanting pump for the next stage. Said quantity of de-ionised water is around 180 litres.

In a third stage the hydro-alcoholic extract of the previous stage is passed through a solids separator to obtain a new hydro-alcoholic extract and a flock-dross.

The flock-dross in this stage is composed of damp, lixiviated coca leaf. Said residue weighs around 520 kilogrammes and the hydro-alcoholic extract around 1870 kilogrammes.

In a fourth stage the hydro-alcoholic extract of the third stage is centrifuged obtaining a new hydro-alcoholic extract and a sludge or cream.

In a fifth stage the floating part of the previous stage is drawn off to produce a hydro-alcoholic extract and a sludge.

In a sixth stage the solids from the hydro-alcoholic extract from the fifth stage are filtered out to obtain a filtered extract and a cream. For the filtering process an infusionary earth is used with particles of 0.5 to 0.6 microns.

In a seventh stage the filtered extract is subjected to a heat source to obtain a concentrated extract. Heating the extract to a temperature between 75 and 95 degrees Centigrade and at a pressure between 22 and 28 PSI a vapour is formed which is released and a concentrated extract. This eliminates some 70 to 80% of the hydro-alcoholic mixture leaving some 20 to 30% of the filtered extract or hydro-alcoholic mixture equivalent to the alcohol-free concentrated extract that is around 140 kilogrammes.

To achieve the required Brix degrees the concentrated extract is re-heated until the required Brix is achieved is achieved, for example between 39 and 41 in this embodiment.

Said vapour comprises alcohol, water vapour and odoriferous substances which can be recovered for other purposes.

All of the concentrated extract is homogenised in a tank for 10 minutes at a temperature of about 80 degrees Centigrade.

Later, a pH level is chosen and, by means of a phosphoric acid solution 70 to 95% pure, the pH level of the concentrated extract is lowered until reaching the previously agreed pH.

Finally, the concentrated extract is packed heated and hermetically for later storage, sale or use in the manufacture of a coca-leaf based drink as previously mentioned.

The concentrated extract of coca leaf according to the above method falls into the following parameters;
- between 35 and 45 Brix degrees
- pH between 4.2 and 5.8
- dried residue between 40 and 55% and
- humidity between 45 and 60%.

Furthermore, its colour is of amber caramel, its flavour is of acidic coca and its aroma is coca.

This patent describes a method for the manufacture of a drink based on coca-leaf extract and the product obtained and the method for making said coca-leaf extract and the product obtained. The examples given do not limit the present invention and therefore may have different applications and/or adaptations, all within the range of the following claims.

## Claims

1. Method for the manufacture of a drink based upon a coca-leaf extract **characterised by** comprising the following stages:
- in a first stage a coca-leaf extract is dissolved in water in a ratio between 1:8 and 1:12 (parts coca-leaf extract / parts water),
- in a second stage solution from first stage is left to settle, one part sinking and a second floating,
- in a third stage the floating part is drawn off by means of a siphon, avoiding mixture with the solid, sunken element,
- in a fourth stage a sugary product or one with sweetening properties is dissolved in water,
- in a fifth stage the floating part resulting from the third stage is added to the liquid resulting from the fourth stage,
- in a sixth stage citric acid is added,
- in a seventh stage lemon essence diluted in alcohol suitable for human consumption is added,
- in a eighth stage everything is mixed until completely dissolution adding water until it is completely even and the required Brix degrees are achieved.

2. Method according to claim 1 **characterised by** the required Brix degrees being between 7, 8 and 9.

3. Method according to claim 2 **characterised by** the product resulting from eight stage being filtered by means of a filter.

4. Method according to claim 3 **characterised by** said filter being a canvas filter.

5. Method according to claim 2 or 3 **characterised by** the final product being pasteurised.

6. Method according to claim 5 **characterised by** said product being bottled hot.

7. Method according to claim 6 **characterised by** the temperature of the product being at least 80 degrees Centigrade.

8. Method according to claim 1 **characterised by** the product obtained in the first stage being left to settle for 24 hours in the second stage.

9. Method according to claim 1 **characterised by** a 'bach' of 1000 litres in the first stage having 4.5 to 6 kilos of coca-leaf extract added to it.

10. Method according to claim 9 **characterised by** the fourth stage using 70 to 90 kilogrammes of sugar.

11. Method according to claim 9 **characterised by** the sixth stage using 1.25 to 2 kilogrammes of citric acid.

12. Method according to claim 9 **characterised by** the seventh stage using 150 to 200 millilitres of essence of lemon diluted in the same quantity of alcohol for human consumption.

13. Method according to claim 9 **characterised by** the water added in the eighth stage completing the evening out of 1000 litres.

14. Product according to the previous method **characterised by** the composition of 300 millilitres being as follows;
- coca-leaf extract between 1.1 and 1.7 millilitres,
- lemon essence between 0.040 and 0.060 millilitres,
- sugar between 0.02 and 0.03 kilogrammes,
- citric acid between 0.4 and 0.5 grammes and
- alcohol suitable for human consumption between 0.04 and 0.06 millilitres said product also having
- a pH between 3 and 4,
- between 8 and 9 Brix degrees,
- a density between 1.01 and 1.03 g/ml and
- an alkaloid content between 7 and 20 milligrammes.

15. Method for making a concentrated coca-leaf extract **characterised by** comprising the following stages;
- in a first stage ground coca leaf is soaked in a hydro-alcoholic solution in a ratio between 1:5 and 1:10 (parts coca-leaf / parts hydro-alcoholic solution),
- in stage two the soluble elements are separated from those which are not, also known as lixiviation, by the contact of the ground coca leaves with the hydro-alcoholic solution obtaining a hydro-alcoholic extract and a flock-dross,
- in a third stage the hydro-alcoholic extract from the previous stage is passed through a solids separator obtaining a new hydro-alcoholic extract and a flock-dross,
- in a fourth stage the hydro-alcoholic extract of the third stage is centrifuged obtaining a hydro-alcoholic extract and a sludge and/or a cream,
- in a fifth stage the floating part from the previous stage is drawn off to obtain a hydro-alcoholic extract and a sludge,
- in a sixth stage the solids from the hydro-alcoholic extract from the fifth stage are filtered to obtain a filtered extract and a cream and
- in a seventh stage the filtered extract is subjected to a heat source to obtain a concentrated extract.

16. Method according to claim 15 **characterised by** the soaking in the first stage being carried out cold and for a period of 24 hours.

17. Method according to claim 15 **characterised by** the hydro-alcoholic solution being composed of de-ionised water and 96° alcohol suitable for human consumption.

18. Method according to claim 17 **characterised by** the hydro-alcoholic solution having a ratio of 1:3 to 1:6 (96°. alcohol for human consumption / de-ionised water)

19. Method according to claim 15 **characterised by** using a cold lixiviator for the lixiviation.

20. Method according to claim 15 **characterised by** using de-ionised water to empty out the hydro-alcoholic extract for the following stage.

21. Method according to claim 15 **characterised by** the flock-dross of the third stage consisting of damp, lixiviated coca leaf.

22. Method according to claim 15 **characterised by** using infusionary earth for the sixth stage filtration.

23. Method according to claim 22 **characterised by** said infusionary earth having particles measuring between 0.5 and 0.6 microns.

24. Method according to claim 15 **characterised by** the filtered extract being heated to a temperature between 75 and 95 degrees Centigrade and to a pressure between 22 and 28 PSI a concentrated extract is produced and a liquid vapour which is disposed of.

25. Method according to claim 24 **characterised by** the concentrated extract being re-heated until reaching the Brix degrees required.

26. Method according to claim 25 **characterised by** the Brix degrees being between 35 and 45.

27. Method according to claim 26 **characterised by** said vapour comprising alcohol, water vapour and odoriferous substances.

28. Method according to at least one of the previous claims 15 to 27 **characterised by** the concentrated extract being homogenised in a tank for some 10 minutes at a temperature of some 80 degrees Centigrade.

29. Method according to claim 28 **characterised by** the lowering of the pH of the concentrated extract by adding phosphoric acid with a purity between 70 and 95%.

30. Method according to claim 28 or 29 **characterised by** said concentrated extract being packaged hot and hermetically.

31. Product according to the previous method **characterised by** the concentrated extract being within the following parameters;
- Brix degrees between 35 and 45,
- pH between 4.2 and 5.8,
- dry residue between 40 and 55% and
- humidity between 45 and 60%.

32. Product according to claim 31 **characterised by** being the colour of amber caramel.

33. Product according to claim 31 **characterised by** a flavour of acidic coca.

34. Product according to claim 31 **characterised by** having an aroma of coca.
